# EUROPEAN PATENT APPLICATION

(11) **EP 2 405 450 A1**
(43) Date of publication of application: **11.01.2012**
(21) Application number: 10748733.2
(22) Date of filing: 02.03.2010
(51) Int. Cl.: H01B 7/08, H01B 7/282, H01B 11/20

(54) **CABLE ASSEMBLY**

(30) Priority: 02.03.2009 JP 2009048415
(71) Applicant: Fujikura, Ltd., Tokyo 135-8512 (JP)
(72) Inventor: KOJIMA Shigeru, Sakura-shi Chiba 285-8550 (JP)
(74) Representative: Cabinet Plasseraud
(86) International application number: PCT/JP2010/053319
(87) International publication number: WO 2010/101138

(57) **Abstract**

An object of the present invention is to provide a cable assembly excellent in water-tightness. A cable assembly 100 includes a plurality of cables 10 and a sealing part 30 holding the plurality of cables 10 side by side. In the cable assembly 100, each of the cables 10 includes an outer conductor 13 and a jacket 14 provided on an outer side of the outer conductor 13, and has a conductor exposed portion 15 where the outer conductor 13 is exposed from the jacket 14. The sealing part 30 is molded integrally with the plurality of cables 10 in such a manner as to cover the conductor exposed portion 15 and end portions 16 of the jacket 14 in each of the cables 10, the end portions of the jacket 14 being adjacent to the conductor exposed portion 15.

## Description

### TECHNICAL FIELD

The invention relates to a cable assembly.

### BACKGROUND ART

Some of small electronic devices typified by cellular phones include a display part and an operating part that are provided separately from each other in such a manner that the small electronic device is foldable at a hinge between the display part and the operating part. In some cases, the display part and the operating part of such a small electronic device are electrically connected to each other by use of a cable assembly as described below. To be specific, the cable assembly includes a plurality of micro coaxial cables arranged side by side and integrated together with connectors at both end portions of the coaxial cables. In such a small electronic device, the cable assembly is routed from a housing provided with the operating part to a housing provided with the display through the inside of the hinge.

Meanwhile, in recent years, small electronic devices are sometimes required to be waterproof. To this end, the above-described small electronic device is required to be waterproof between the housing provided with the operating part and the cable assembly and to be waterproof between the housing provided with the display and the cable assembly. Patent Document 1 listed below describes an electronic device including a packing provided around a plurality of cables to thus be waterproof between the plurality of cables and a housing with the packing. The packing is provided around the cables by being molded integrally with the cables.

### CITATION LIST

### PATENT DOCUMENT

Patent Document 1: Japanese Patent Application Publication No. 2004-47968

### SUMMARY OF THE INVENTION

### OBJECTS TO BE ACHIEVED BY THE INVENTION

However, a jacket, which is an insulating cover layer of a cable, is generally formed of a fluorine-based resin. For this reason, even when a packing and cables are integrally molded as in the electronic component described in Patent Document 1, the packing is still easily separated from the jackets. Hence, if the cable is subjected to such a stress to displace the packing in a longitudinal direction of the cables by the twisting of the cables due to the folding operation of the electronic device, the packing is sometimes separated from the jackets by the stress. In this case, a gap is formed between the packing and the jackets, which eventually allows water to penetrate through the gap.

In this regard, an object of the present invention is to provide a cable assembly excellent in water-tightness.

### MEANS FOR ACHIEVING THE OBJECTS

A cable assembly of the present invention is characterized by including: a plurality of cables; and a sealing part holding the plurality of cables side by side, in which each of the cables includes a metal conductor and an insulating cover layer provided on an outer side of the metal conductor, and has a conductor exposed portion where the metal conductor is exposed from the insulating cover layer, and the sealing part is molded integrally with the plurality of cables in such a manner as to cover the conductor exposed portion and end portions of the insulating cover layer in each of the cables, the end portions of the insulating cover layer being adjacent to the conductor exposed portion.

In the cable assembly as described above, since the sealing part holds the plurality of cables arranged side by side, the relative positions of the respective cables with respect to one another are determined. In addition, the sealing part is molded integrally with the plurality of cables in such a manner as to cover the conductor exposed portion where the metal conductor is exposed from the insulating cover layer in each of the plurality of cables. Accordingly, the sealing part is fixed on the metal conductors more firmly than the case where the sealing part is molded integrally with only the insulating cover layers. This structure prevents the sealing part from being displaced from the cables even if such a stress to displace the sealing part in a longitudinal direction of the cables is applied to the cables. In addition, the sealing part is molded integrally with the cables in such a manner as to also cover the end portions of each insulating cover layer, which are adjacent to the conductor exposed portion. Thus, even if a stress is generated between the sealing part and the cables as described above, the sealing part is prevented from being displaced from the conductor. For this reason, a gap is unlikely to be formed between each insulating cover layer and the sealing part at the end portions of the insulating cover layer, which are adjacent to the conductor exposed portion. In this manner, water can be prevented from penetrating from an interstice between the insulating cover layer and the sealing part. Therefore, the cable assembly is excellent in water-tightness.

In addition, it is preferable that the metal conductor be formed of a plurality of wires, and a second resin be filled in a space formed between each adjacent two of the wires.

In the cable assembly as describe above, even if a crack or the like is generated in a portion, not covered with the sealing part, of the insulating layer and allows water to penetrate through the crack and run between the wires in the insulating cover layer, it is possible to prevent further penetration of the water with the second resin filled in the space between the wires. Therefore, the cable assembly is more excellent in water-tightness.

Moreover, it is preferable that the cable assembly further include an over jacket bundling at least two or more out of the plurality of cables around the insulating cover layers thereof, and that the over jacket be covered with the sealing part.

In the cable assembly as described above, since the over jacket is covered with the sealing part, the sealing part can be further prevented from being displaced from the cables.

Furthermore, it is preferable that the second resin be filled further in a space formed between the insulating cover layers and the over jacket.

In the cable assembly as described above, since the second resin is filled further in the space formed between the insulating cover layers and the over jacket, a gap is unlikely to be formed between the over jacket and the insulating cover layers. Accordingly, it is possible to prevent water from penetrating between the over jacket and the insulating cover layers.

### EFFECT OF THE INVENTION

The present invention provides a cable assembly excellent in water-tightness.

### BRIEF DESCRIPTION OF THE DRAWINGS

Fig. 1 is a plan diagram illustrating a cable assembly according to a first embodiment of the present invention.
Fig. 2 is a diagram illustrating a structure of a cable illustrated in Fig. 1 in a cross section thereof perpendicular to a longitudinal direction of the cable.
Fig. 3 is a diagram illustrating a part of a cross section of the cable assembly illustrated in Fig. 1, the cross section being taken along the line III-III.
Fig. 4 is an enlarged diagram illustrating a region S in Fig. 3.
Fig. 5 is a diagram illustrating a part of a cross section of the cable assembly illustrated in Fig. 1, the cross section being taken along the line V-V.
Fig. 6 is a plan diagram illustrating a cable assembly according to a second embodiment of the present invention.
Fig. 7 is a diagram illustrating a part of a cross section of the cable assembly illustrated in Fig. 6, the cross section being taken along the line VII-VII.

### BEST MODE FOR CARRYING OUT THE INVENTION

Preferred embodiments of a cable assembly according to the present invention will be described in detail below with reference to the drawings.

### (First Embodiment)

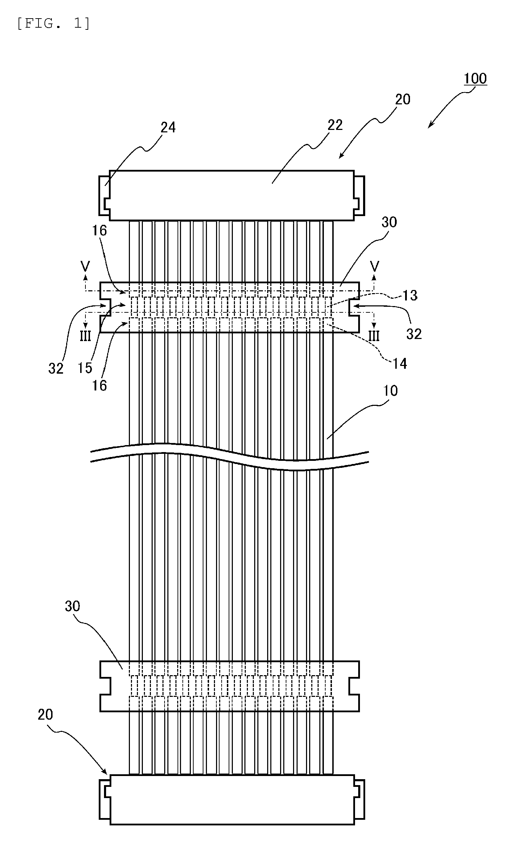

Fig. 1 is a plan diagram illustrating a cable assembly according to a first embodiment of the present invention.

As illustrated in Fig. 1, a cable assembly 100 includes a plurality of cables 10 arranged side by side one another, a pair of connectors 20 and 20 in which the ends of the cables 10 are fixed, and a pair of sealing parts 30 each of which holds the cables 10.

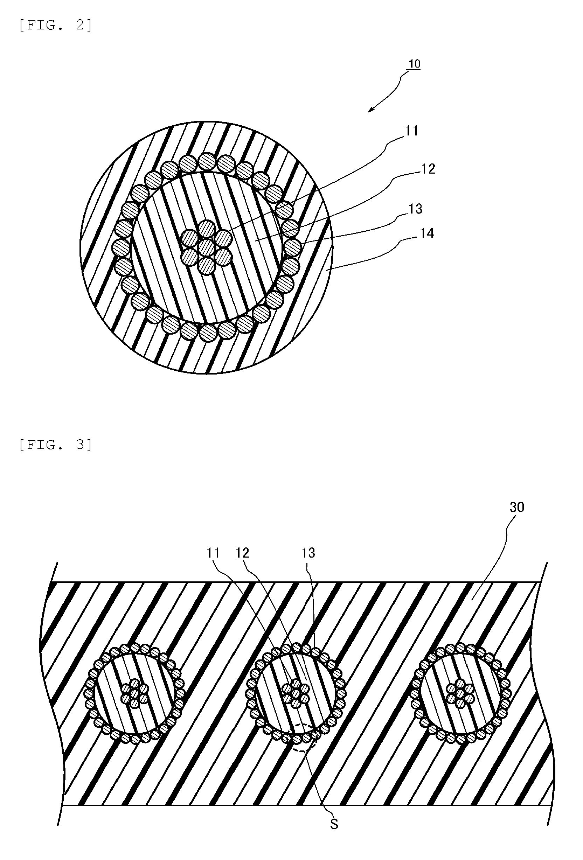

Fig. 2 is a diagram illustrating a structure of each of the cables illustrated in Fig. 1 in a cross section thereof perpendicular to a longitudinal direction of the cables. As illustrated in Fig. 2, each cable 10 is in the form of a coaxial cable, and includes at its center a center conductor 11 formed of conductor stranded wires. The center conductor 11 is covered with an inner insulating layer 12 formed of an insulating resin. An outer conductor 13 is provided on an outer peripheral surface of the inner insulating layer 12. The outer conductor 13 is formed of a metal conductor obtained by braiding a plurality of wires. Further, the outer conductor 13 is covered with a jacket 14 formed of an insulating resin as an insulating cover layer.

Each of the connectors 20 illustrated in Fig. 1 includes a housing 24 and a ground conductor 22 fixed to the housing 24. In the housing 24, a plurality of unillustrated terminals are formed, which are connected to the center conductors 11 of the respective cables 10. In addition, the ground conductor 22 is connected to the outer conductors 13 of the respective cables 10 through an unillustrated ground bar.

Fig. 3 is a diagram illustrating a part of a cross section of the cable assembly illustrated in Fig. 1, the cross section being taken along the line III-III. As illustrated in Fig. 1, each cable 10 has a conductor exposed portion 15 formed therein in which a part of the jacket 14 is removed to expose the outer conductor 13. In addition, as illustrated in Figs. 1 and 3, the sealing part 30 is molded integrally with each cable 10 in such a manner as to cover the cable 10 at a position where the conductor exposed portion 15 is formed. Hence, the sealing part 30 covers the outer conductors 13.

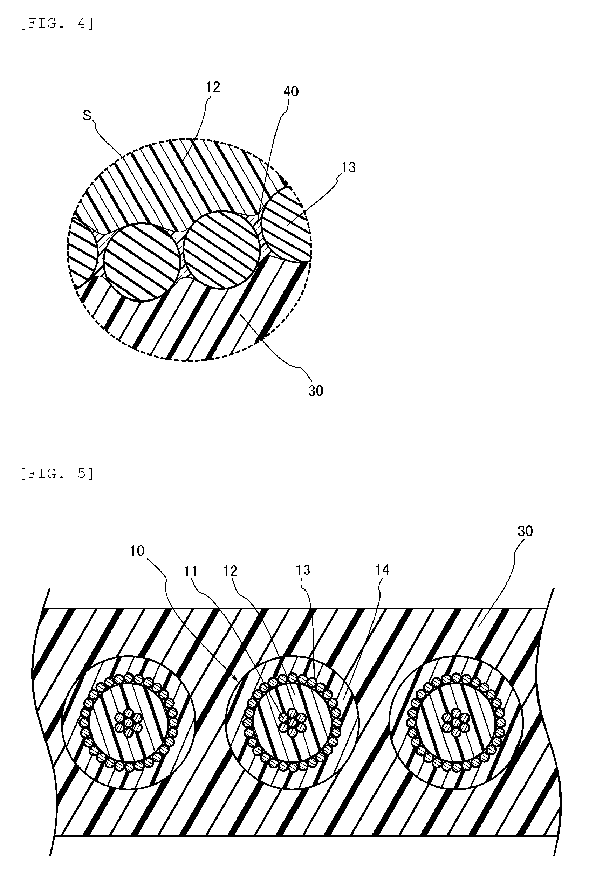

Fig. 4 is an enlarged diagram illustrating a region S in Fig. 3. As illustrated in Fig. 4, while the resin forming the sealing part 30 has not entered a space between each adjacent two of the wires forming the outer conductor 13, a second resin 40 is filled in the space.

Fig. 5 is a diagram illustrating a part of a cross section of the cable assembly illustrated in Fig. 1, the cross section being taken along the line V-V. As illustrated in Figs. 1 and 5, the sealing part 30 covers not only the conductor exposed portion 15 but also end portions 16 of the jacket 14 which are adjacent to the conductor exposed portion 15 in each cable 10.

Note that, although not illustrated, the above-described second resin is filled also in a space formed between each adjacent two of the wires of the outer conductor 13 at portions covered with the end portions 16 of the jacket 14. To put it differently, the second resin 40 is filled in the space between each adjacent two of the wires of the outer conductor 13 continuously across a region from the conductor exposed portion 15 to the portions covered with the end portions 16 of the jacket 14.

Moreover, as illustrated in Fig. 1, the sealing part 30 is provided with a groove portion 32 with which an unillustrated rubber-made O-ring is to be hooked on the sealing part 30. The rubber-made O-ring is a member to fill a gap between a housing of an unillustrated electronic device and the sealing part 30 when the cable assembly 100 is mounted in the electronic device.

As described above, in the cable assembly 100 of the embodiment, the sealing part 30 holds the plurality of cables 10 arranged side by side. Accordingly, the positions of the respective cables 10 relative to one another are determined. In addition, the sealing part 30 is molded integrally with the plurality of cables 10 in such a manner as to cover the conductor exposed portions 15 where the outer conductors 13 are exposed from the jackets 14 of the plurality of cables 10. For this reason, the sealing part 30 is fixed on the outer conductors 13 more firmly than the case where the sealing part 30 is molded integrally with only the jackets 14. This structure prevents the sealing part 30 from being displaced from the cables 10 even if such a stress to displace each cable 10 and the sealing part 30 from each other is applied to the cable 10. Moreover, the sealing part 30 is formed integrally with the cables 10 in such a manner as to also cover the end portions 16 of the jacket 14, which are adjacent to the conductor exposed portion 15. Thus, even if a stress is generated between the sealing part 30 and the cables 10 as described above, the sealing part 30 is prevented from being displaced from the cables 10. Therefore, a gap is unlikely to be formed between the jacket 14 and the sealing part 30 at the end portions 16 of the jacket 14, which are adjacent to the conductor exposed portion 15. Since water is prevented from entering the cable assembly 100 through an interstice between the jacket 14 and the sealing part 30, the cable assembly 100 can achieve an excellent water-tightness.

Moreover, in the embodiment, each outer conductor 13 is formed of the plurality of wires, and the second resin 40 is filled in the spaces between the wires. Hence, even if a crack or the like is generated in a portion, not covered with the sealing part 30, of the jackets 14 and allows water to penetrate through the crack and run between the wires, this structure makes it possible to prevent further penetration of water with the second resin 40 filled in the space between the wires.

Furthermore, in the embodiment, the second resin 40 is filled in the spaces formed between the wires of the outer conductor 13 at the portions covered with the end portions 16 of the jacket 14, which are adjacent to the conductor exposed portion 15. This structure improves the water-tightness of the inside of each cable 10 covered with the jacket 14.

Next, major materials for forming the cable assembly 100 will be described.

The material of the center conductor 11 of each cable 10 is not particularly limited as long as it is a conductor, and may be copper, nickel, or the like, for example. In addition, the material of the inner insulating layer 12 covering the center conductor 11 is not particularly limited as long as it is an insulative resin, and may be a polyolefin-based resin, for example. The polyolefin-based resin may be an ethylene propylene copolymer-based resin, polypropylene, polyethylene, or a mixture of any of these. The material of each outer conductor 13 is not particularly limited as long as it is a metal conductor, and may be copper, nickel, or the like, for example. Moreover, the material of the jacket 14 is preferably a material excellent in properties such as fire resistant property, water resistant property, and insulating property. Such a material includes an ethylene-based material, such as polyethylene, an ethylene-vinyl acetate copolymer, or an ethylene-ethyl acrylate copolymer, and also includes one obtained by adding a metal hydroxide, such as magnesium hydroxide or aluminium hydroxide, to a composite resin obtained as a base material by blending any of the above-listed ethylene-based materials with a polyolefin, such as polypropylene, ethylene-propylene rubber, or a styrene-based elastomer.

The material of the sealing part 30 may be a thermoplastic resin, preferably a resin other than fluorine-based resins, for example, and particularly preferably a polyamide-, polyolefin-, or urethane-based resin, or the like from the viewpoint that these materials can be firmly fixed onto the outer conductor 13.

Further, the material of the second resin may be an ultraviolet curing resin, and specifically, may be an acrylicor epoxy-based resin.

Next, a method of manufacturing the cable assembly 100 will be described.

First, the plurality of cables 10 are arranged side by side on an unillustrated jig (arranging step). Then, the center conductor 11, at each of the ends of each cable, is connected to the terminal provided in the housing 24 of the connector 20. Thereafter, the unillustrated ground bar is connected to the outer conductors 13 of the respective cables, and is assembled with the ground conductor 22.

Subsequently, a part of the jacket 14 of each cable 10 is removed at a position where the sealing part is planned to be provided, thereby exposing the outer conductor 13 (removing step). The part, exposed in this step, of the outer conductor 13 is to be the conductor exposed portion 15. A laser is preferably used for the removal of the jacket 14 from the viewpoint of preventing damage of the outer conductor 13 and conducting the removal efficiently. The laser may be a CO₂ laser, for example. The jacket 14 may be removed alternatively by using a mechanical stripper in place of the laser.

Next, a precursor of an ultraviolet curing resin to serve as the second resin is filled between the wires of the outer conductors 13 by applying the precursor of the ultraviolet curing resin onto the outer conductors 13 in the conductor exposed portion 15. After that, the precursor is irradiated with an ultraviolet ray to be formed into the second resin (filling step). The viscosity of the precursor of the ultraviolet curing resin in this step is preferably 0.3 to 15 Pa·s because the precursor with such viscosity can be sufficiently filled between the wires in the conductor exposed portion 15. Further, it is more preferable that the viscosity of the precursor be 0.5 to 1.5 Pa·s because the precursor with such viscosity can sufficiently permeate and be filled between the wires of the outer conductors 13 at the portions covered with the jacket 14.

Subsequently, the plurality of cables arranged side by side are loaded in an unillustrated mold, and the sealing part 30 is insert-molded in the mold. To be specific, the outer conductors 13 in the conductor exposed portion 15 and the end portions 16 of the jackets 14 on the conductor exposed portion 15 side are first covered with a molten thermoplastic resin, followed by pressurization. Then, the thermoplastic resin is cured to be molded into the sealing part 30 (molding step). As a result, the plurality of cables and the sealing part are integrally molded, so that the plurality of cables 10 are held by the sealing part 30. Note that the viscosity of the thermoplastic resin in the molten state is preferably 1.5 to 4.0 Pa·s because the thermoplastic resin with such viscosity easily flows into minute gaps between the cables.

In the above-described manner, the cable assembly 100 is obtained.

### (Second Embodiment)

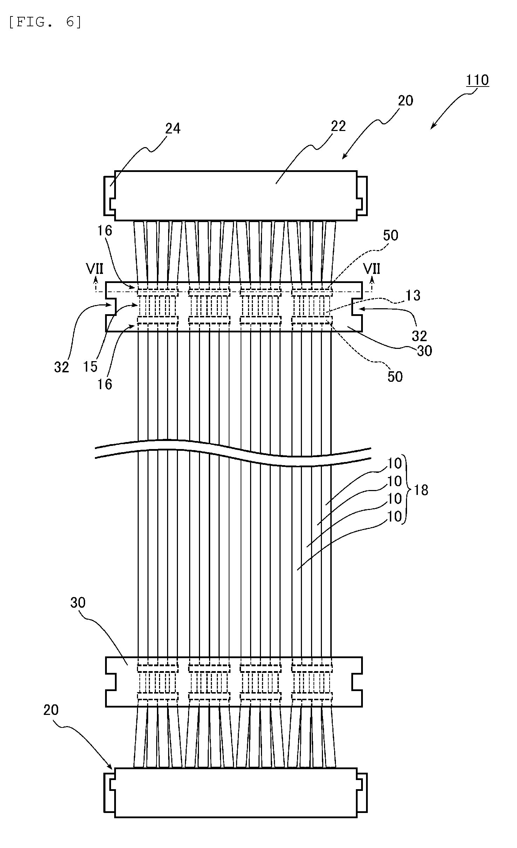

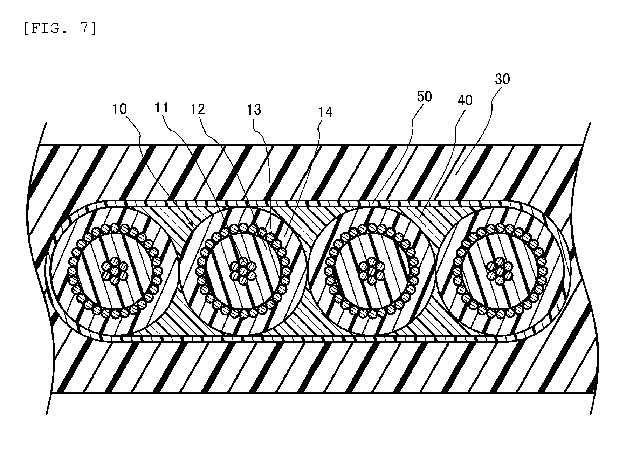

Next, a second embodiment of the present invention will be described in detail with reference to Fig. 6. Note that the same or similar constituent elements as or to those in the first embodiment are denoted by the same reference numerals and redundant description is omitted. Fig. 6 is a plan diagram illustrating a cable assembly according to a second embodiment of the present invention. Fig. 7 is a diagram illustrating a part of a cross section of the cable assembly illustrated in Fig. 6, the cross section being taken along the line VII-VII.

As illustrated in Fig. 6, a cable assembly 110 of the embodiment is different from the first embodiment in that the cable assembly 110 further includes an over jacket 50 for bundling at least two or more out of the plurality of cables 10 around the jackets 14.

The over jacket 50 bundles two or more cables 10 on each of the end portions 16 of the jacket 14, which are adjacent to the conductor exposed portion 15. In this way, the plurality of cables 10 are divided into a plurality of cable bundles 18.

In addition, as illustrated in Figs. 6 and 7, the sealing part 30 covers the conductor exposed portion 15 and also covers each of the end portions 16 of each jacket 14, which are adjacent to the conductor exposed portion 15, together with the over jacket 50. Moreover, the second resin 40 is filled in a space formed between the over jacket 50 and the jacket 14.

In the cable assembly 110 of the embodiment, since the sealing part 30 further covers the over jackets 50, the sealing part 30 can be prevented from being displaced from the cables 10. For this reason, a gap is unlikely to be formed between the jackets 14 and the sealing part 30, and therefore, the cable assembly 110 is more excellent in water-tightness.

In addition, since the second resin 40 is filled further in the space formed between the jacket 14 and the over jacket 50, a gap is unlikely to be formed between the jacket 14 and the over jacket 50. Accordingly, since water can be prevented from penetrating between the jacket 14 and the over jacket 50, the cable assembly 110 is excellent in water-tightness.

Note that the over jacket 50 is formed of a thermoplastic resin. Such thermoplastic resin includes fluororesins, such as polytetrafluoroethylene (PTFE), a tetrafluoroethyelene-perfluoroalkyl vinylether copolymer (PTA), and a tetrafluoroethylene-ethylene copolymer (ETFE). Note that, it is preferable that the resin used for the over jacket 50 have a melting point lower than that of the resin used for the jacket 14 because this prevents the fusion of the jacket 14 and the over jacket 50, and provides excellent processability in peeling the over jacket 50 off.

The cable assembly 110 as described above can be manufactured as follows.

The plurality of cables 10 are arranged in the same manner as that in the first embodiment (arranging step).

Next, at least two or more out of the plurality of cables 10 are bundled by use of a tape-shaped over jacket into the plurality of cable bundles 18 (bundling step). Thereafter, the over jackets 50 are fixed onto the jackets 14 by heating.

Subsequently, the connectors 20 are connected to the ends of the cables 10 in the same manner as that in the first embodiment.

Next, a center portion of the over jacket 50 in a direction along the cables 10 and corresponding portions of the jackets 14 are removed. The removal may be performed by the same method as that employed in the first embodiment. In this way, the conductor exposed portion 15 is formed in such a manner as to be sandwiched by the over jacket 50.

Then, the sealing part 30 is formed through insert-molding in the same manner as that in the first embodiment. In this process, the sealing part 30 is formed in such a manner as to cover the over jacket 50.

In the above-described manner, the cable assembly 110 is obtained.

The present invention has been described so far by giving the first and second embodiments as examples. The present invention is however not limited to these embodiments.

For example, the first and second embodiments are configured such that each cable 10 is a coaxial cable and the outer conductor 13 is exposed at the conductor exposed portion 15. The present invention is however not limited to this configuration. For example, in place of the cable 10, an insulated electric wire may be employed which includes no external conductor and in which a metal conductor formed of a plurality of wires is covered with an insulating cover layer. In this configuration, the metal conductor is exposed at the conductor exposed portion.

In addition, although the first and second embodiments are configured such that the second resin 40 is filled in the space formed between the wires of the outer conductor 13. This configuration is however not an essential configuration, and the second resin 40 has not necessarily to be filled. Alternatively, the thermoplastic resin that forms the sealing part 30 may be filled in place of the second resin 40.

Moreover, the second embodiment is configured such that the second resin 40 is filled in the space formed between the over jacket 50 and the jacket 14. This configuration is however not an essential configuration, and the second resin 40 has not necessarily to be filled. Alternatively, the thermoplastic resin that forms the sealing part 30 may be filled in place of the second resin 40.

### INDUSTRIAL APPLICABILITY

The present invention makes it possible to provide a cable assembly excellent in water-tightness.

### EXPLANATION OF REFERENCE NUMERALS

- 10...: cable
- 11...: center conductor
- 12...: inner insulating layer
- 13...: outer conductor (metal conductor)
- 14...: jacket (insulating cover layer)
- 15...: conductor exposed portion
- 16...: end portion
- 18...: cable bundle
- 20...: connector
- 22...: ground conductor
- 24...: housing
- 30...: sealing part
- 32...: groove portion
- 40...: second resin
- 50...: over jacket
- 100, 110...: cable assembly

## Claims

1. A cable assembly comprising:
a plurality of cables; and
a sealing part holding the plurality of cables side by side, wherein
each of the cables includes a metal conductor and an insulating cover layer provided on an outer side of the metal conductor, and has a conductor exposed portion where the metal conductor is exposed from the insulating cover layer, and
the sealing part is molded integrally with the plurality of cables in such a manner as to cover the conductor exposed portion and end portions of the insulating cover layer in each of the cables, the end portions of the insulating cover layer being adjacent to the conductor exposed portion.

2. The cable assembly according to claim 1, wherein the metal conductor is formed of a plurality of wires, and a second resin is filled in a space formed between each adjacent two of the wires.

3. The cable assembly according to claim 1 or 2, further comprising an over jacket bundling at least two or more out of the plurality of cables around the insulating cover layers thereof, wherein the over jacket is covered with the sealing part.

4. The cable assembly according to claim 3 wherein the second resin is filled further in a space formed between the insulating cover layers and the over jacket.
